# EUROPEAN PATENT SPECIFICATION

(11) **EP 2 856 879 B1**
(45) Date of publication and mention of the grant of the patent: **27.04.2016**
(21) Application number: 13004784.8
(22) Date of filing: 04.10.2013
(51) Int. Cl.: A21C 3/04, A21C 5/00, A21C 15/00

(54) **Apparatus for depositing edible mass**
Vorrichtung zum Ablegen von essbarer Masse
Appareil de dépôt de masse comestible

(43) Date of publication of application: 08.04.2015
(73) Proprietor: Aasted ApS, 3520 Farum (DK)
(72) Inventor: Henrichs, Holger, 3500 Værløse (DK)
(74) Representative: Heiden, Finn

(56) References cited:
- EP-A2- 0 909 534
- US-A- 3 757 833
- US-A- 5 378 133

## Description

The present invention concerns the field of extruders and depositors for the confectionery industry, the bakery industry as well as other fields of the food preparation industry. The apparatus deposit strands of mass to be cut into size, or lumps of mass which could be decorated or even moulded into shape in a further processing step. The confectionery mass handled could for example be chocolate mass with a content or pure cocoa mass or any mass having a content of chocolate-like mass. It could also be marzipan, caramel mass, toffee mass or even jam. In the bakery field any type of dough is extruded or deposited into cookies, cakes, sticks, bread or the like. Other fields of the food preparation industry comprise meat preparation and especially preparation of meat with inclusions such as for example for pet food. Preparation of diary products such as yoghurt with fruit inclusions are also comprised, as well as all kinds of preparation of starch-based mass such as from potato mass.

The apparatus comprises an elongated trough with an inside chamber for the mass, a pump roller housed in a channel at the bottom of the trough, as well as a row of deposit openings arranged along the bottom, which pump roller comprises a single, central shaft having a succession of disc-shaped rotors defining the outer periphery of the pump roller, and which rotors are formed as wave-shaped displacers arranged in a succession of arc-shaped channels in which the mass is transported towards the particular openings at the bottom, that a closure plate is arranged longitudinally in the channel and radially to the shaft, comprising a succession of notches into which the rotors engage, so that the plate is given a reciprocal movement by the rotation of the pump roller

The mass of confectionery or dough is typically deposited continuously as strands or as gobs or lumps on an underlying, continuous moving conveyor mesh or web. Rows or lumps of dough are deposited and transported on to a baking oven and possibly further on to stations making final treatments with decorations of masses such as chocolate, chocolate-like recipes or other types of recipes with sugar content. When the mass is confectionery mass, such as marcipan, nougat, fruit products or mass for functional type products, it is typically extruded as bars. Mass with chocolate or chocolate-like content may also be so liquid, that it is deposited into underlying mould cavities. Extruded products as bars are often enrobed with a layer of liquid chocolate.

A nozzle is typically arranged under each opening giving the desired shape to each lump. A wire-cutter could for example be arranged under the row of openings for cutting the deposited mass into desired amount and length of the extruded strands.

EP 0 909 534 A2 discloses an apparatus for extruding dough having an open trough and a pump roller with disc-shaped rotors. The disc-shaped rotors are formed as planar discs, that transports the dough by means of friction engagement in the intermediary channels between the disc-shaped rotors during rotation. The construction creates an increasing compression of the dough from inlet towards the outlet due to the friction engagement with the dough. This creates an unpredictable impact to the texture of the dough which is then altered. The texture and recipe of the dough could then not be controlled within desirable margins. A further disadvantage is, that the construction could not be used for dough types such as for cookies with low or diminishing friction engagement due to high content of butter or other fats.

EP 1 661 462 A1 discloses an apparatus of the introductory art by which two upper, neighbouring feed rollers closes of the trough transversely. A secondary mass chamber is then available under the rollers and above the pump roller at the bottom of the trough. The two rollers rotate in opposite directions in towards each other. The mass in the trough is transported in between the two feed rollers and down into the secondary mass chamber. The diameter of the pump roller is small compared to the width of the trough, and is approximately ¼ of that. For creating a constant pressure over and in the cavities of the pump roller, the secondary chamber is needed. To achieve an accurate extrusion process the cavities must always be filled completely under all conditions. This is achieved by the static pressure in the secondary chamber. The configuration is then a so-called "closed" configuration with the mentioned pressure build up, and by which the pump capacity of the pump roller is diminished. Instead it functions as an open-closure means when depositing. When extruding mass It functions as a dosing-regulating means. Typically, the static over-pressure is set to a level that is sufficient to fill the cavities completely under the particular conditions. However, when the capacity of the apparatus is increased by increasing the revolutions per minute of the pump roller, the exposure period for each cavity of the pump roller to the mass above is reduced more and more, so that filling gets more and more critical. The pressure is then raised by the operator for achieving a faster filling, which however, may influence on the inner structure of the mass. The pump roller is arranged in a row of separate houses which requires expertise for disassembly, cleaning and reassembly thereof.

EP 1 661 463 A1 discloses another apparatus of the introductory art, by which an upper feed roller and a major feed roller having flexible lamellas are arranged to transport the mass and build up constant mass pressure above a pump roller with wave-shaped displacers at the bottom. The pump roller is arranged in a housing underneath the bottom of the trough. Periodical inspection, disassembly and reassembly require training and skills.

The prior art apparatus feature advanced building-wise with several parts for achieving the necessary pressure In the mass over the pump or dosing roller in the form of feed rollers, housing parts, lamellas, etc. The pressure build-up in the mass of these prior art "closed" configurations has to be controlled exactly not to make influence on delicate mass types.

The invention is as defined in the claims. The inventive apparatus is characterised in that the inside chamber extends as a vertical channel from the top of the trough and down to an upper part of the pump roller periphery. The upper part of the periphery of the pump roller is then exposed directly to the major mass in the trough. The mass fills out the vertical channel on top of the upper part of the periphery of the pump. No restrictions are made in the channel. So the mass is free to flow downwards in a channel In a "first in - first out" manner. The mass then effectively fills radially in between the wave-shaped displacers and into the arc-shaped chambers of the pump roller. The wave-shaped displacers of the pump roller effectively take the action of a pump, which continuously transports the mass on to the openings at the bottom of the trough. The mass is then relieved from any static overpressure when entering the arc-shaped chambers of the wave-shaped displacers of the pump roller as exerted by the prior art solutions having rollers transversely closing off the trough above the pump roller. Mass with high contents of inclusions may then enter into the roller pump very easily still bringing with it the inclusions into the pump cavities. Hereby Is also achieved an apparatus which is extremely simple in its building-wise, has very few parts, and is fast and simple to clean and service.

When the circumferential length of the exposed upper part of the pump roller periphery is greater than one full length of a wave of the wave-shaped displacers, the mass fills out the cavities between the wave-shaped displacers fast and efficient. A full length is from bottom of a wave until next neighbouring bottom. Then, there is more than one full wave-length exposed to be filled continuously and properly. Whether the mass has a low or high density, the pump is then both accurate and reliable. Also mass with inclusions such as meat, pet food, and much more Is filling into the cavities effectively. The apparatus then has a very broad range of applications.

A single feed roller can advantageously be arranged with part of Its periphery in a secondary channel in the trough and having its periphery close to the periphery of the pump roller, and that the pump roller and the feed roller are adapted to rotate in opposite directions in towards each other for transporting the mass in the trough directly down in between the wave-shaped displacers and into the arc-shaped chambers.

The action of the feed roller is effective and supports to transport the mass directly down into the arc-shaped cavities of the pump roller. The feed roller then also supports in the filling with mass horizontally from the sides. This is especially advantageous for handling lower viscous mass, such as chocolate mass, aerated mass, and mass with content of butter and the like.

Hereby is also provided an apparatus, that is extremely gently to the inner structure of the mass. The action of the feed roller further supports the "first in -first out" flow of the mass down the vertical channel. As only one feed roller is required and the pump roller is supported in a channel at the bottom of the trough without a lot of parts for a separate housing, the apparatus is at the same time very simple and fast to dismantle and reassemble again for cleaning and service.

When the diameter of the pump roller is larger than half of the width of the trough, the exposure period for filling the wave-shaped displacers are then large and major, so that the pump roller provides for an accurate pump with high capacity also when required at high revolutions of the pump roller.

When the radial height of the arc-shaped channels is smaller than 1/10 of the diameter of the pump roller, the filling of the pump cavities with mass is especially fast. The mass only has to run a short radial distance into the pump, making it extremely accurate.

When the wave-shaped displacers comprise more than four waves extending over the periphery of the rotors, at least one wave is closed of against suction and pressure when the pump roller rotates. The pump is then especially advantageous for low-density mass, for example aerated mass.

When the diameter of the feed roller is between half and ¾ of the width of the trough, the transport of the mass down into the arc-shaped cavities is powerful and most efficient for all types of mass.

The invention is explained further under reference to the drawings, from which
Fig. 1 discloses the inventive apparatus, seen in perspective with a part of the trough cut away,
Fig. 2 the same, seen in vertical section,
Fig. 3 the same as in figure 1, seen from a slightly different angle with further parts cut away from the feed roller and the pump roller, and
Fig. 4 the same as in fig. 2, however without an auxiliary feed roller.

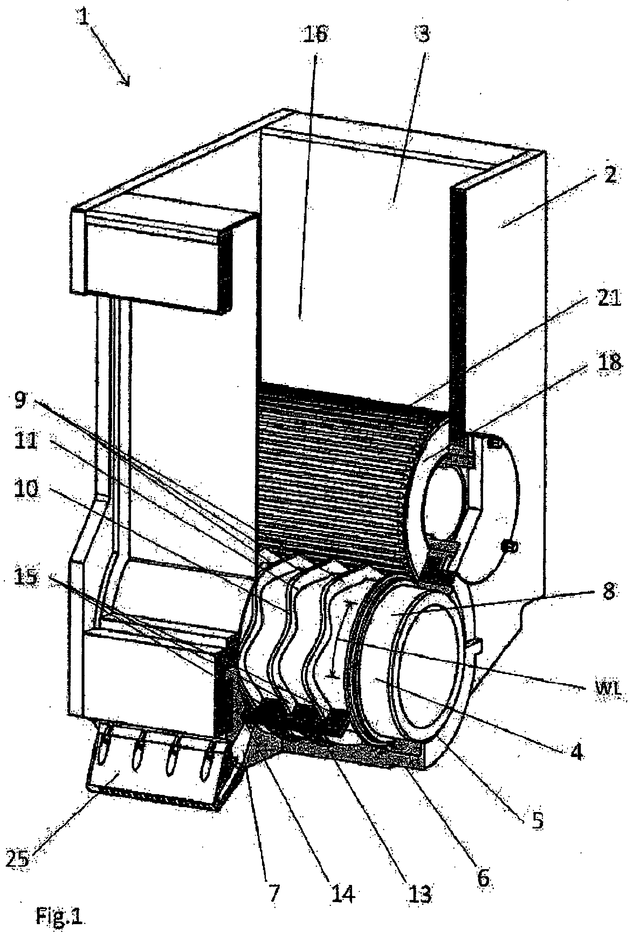

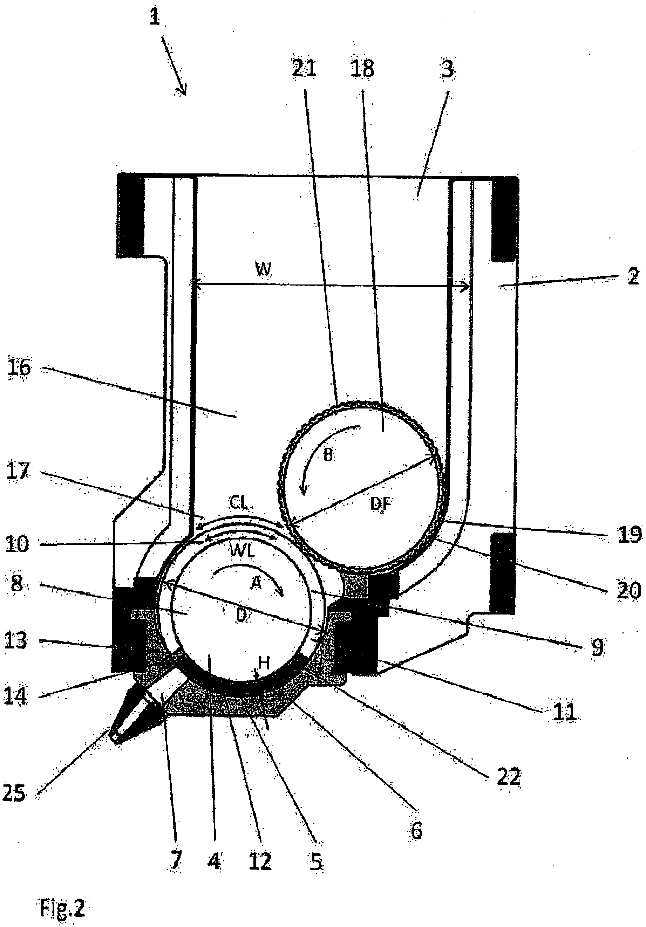

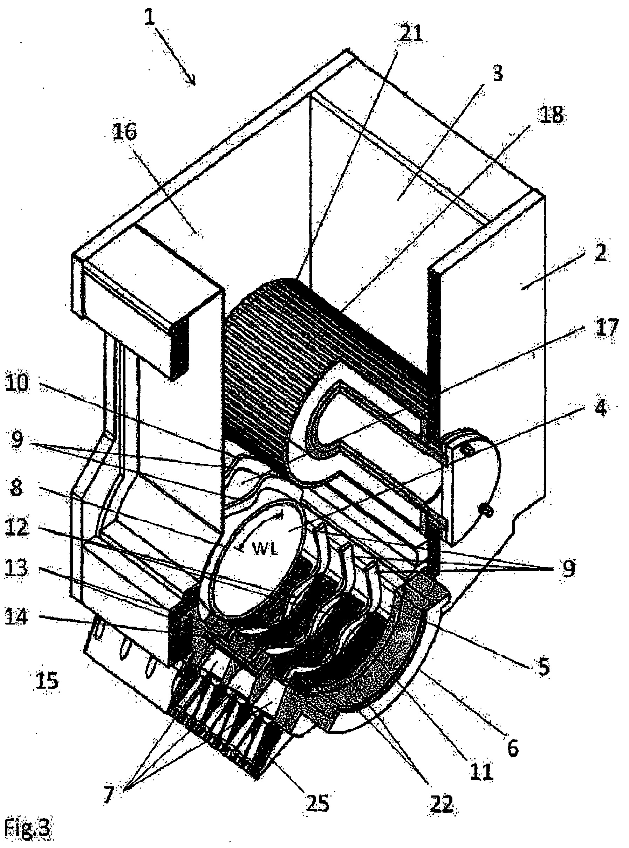

The apparatus 1, disclosed in figure 1, comprises an elongated trough 2, an inside chamber 3 for the mass as well as a pump roller 4 housed in a channel 5 at the bottom 6 of the trough 2. Deposit openings 7 are arranged in a row along the bottom 6. The pump roller 4 comprises a single, central shaft 8 having a succession of disc-shaped rotors 9 defining the outer periphery 10 of the pump roller 4. The rotors 9 are formed as wave-shaped displacers 11 arranged in a succession of arc-shaped channels 12 as disclosed at figures 2 and 3. In the channels 12 mass are transported towards the particular openings 7 at the bottom 6 of the trough 2. A longitudinally extending closure plate 13 is arranged in a groove 14 in the channel 5 and radially to the shaft 8 for providing a pressure and a suction side for the pump. A succession of notches 15 are arranged in the closure plate 13 into each of which a rotor 9 engages, so that the plate 13 is given a reciprocal movement by the rotation of the pump roller 4.

The inside chamber 3 extends as a vertical channel 16 from the top of the trough 2 and down to an upper part 17 of the pump roller periphery 10. The upper part 17 of the periphery 10 of the pump roller 4 is then exposed directly to the major mass in the trough 2. When the mass is filled into the trough 2, it fills out the vertical channel 16 on top of the upper part 17 of the periphery of the pump 4. So the mass is free to flow downwards and then effectively fills radially in between the wave-shaped displacers 11 and into the arc-shaped chambers 12 of the pump roller 4.

The mass is then relieved from any static overpressure when entering the arc-shaped channels 12 of the wave-shaped displacers of the pump roller. The prior art solutions having rollers transversely closing off the trough above the pump roller exerted such overpressure. The wave-shaped displacers 11 of the pump roller 4 effectively take the full action of a pump, which continuously transports the mass on to the openings 7 at the bottom of the trough 2. Mass with high content of inclusions may then enter into the pump roller right away and very smoothly, still bringing with it the inclusions in a homogenous manner into the pump. Hereby is also achieved an apparatus which is extremely simple in its building-wise, has very few parts, and is fast and simple to clean and service.

When the circumferential length CL of the exposed upper part 17 of the pump roller periphery 10 Is greater than one full length WL of a wave of the wave-shaped displacers 11, the mass fills out cavities between the wave-shaped displacers fast and efficient. A full length WL is from bottom of a wave until next neighbouring bottom. Then, there is more than one full wave-length WL exposed to be filled continuously and properly. Whether the mass has ow or high density, the pump 4 is then both accurate and reliable. Also mass with inclusions such as meat, petfood, and much more is filling into the cavities effectively. The apparatus then has a very broad range of applications.

By the embodiment disclosed in figures 1-3 a feed roller 18 is arranged with part of its periphery 19 in a secondary channel 17 In the trough 2. The periphery of the feed roller 18 is also arranged close to the periphery 10 of the pump roller 4. Hereby is meant, that it is arranged as close as possible without the rollers 18, 4 touching each other. The two rollers 18, 4 are not making abrasive wear on each others peripheral surfaces. The pump roller 4 and the feed roller 18 are adapted to rotate in opposite directions A and B in towards each other. Hereby is achieved an especially effective pump synergy caused between the close arrangement and the action of the two rollers in towards each other. The arrangement of part of the feed roller 18's periphery 19 in a secondary channel 20 closes off for passage of mass between the feed roller 18 and the inside of the trough 2. The rotation of the feed roller 18 in direction towards the pump roller 4 supports a continuous flow of mass down through the vertical channel 16, especially when the mass has content of fat, butter, air etc. The mass is then supported to flow in the vertical channel 16 from the reservoir in the trough 2 and directly down in between the wave-shaped displacers 11 of the pump roller 4. The wave-shaped displacers 11 has a superior grip in the mass, which is then transported directly down into the arc-shaped channels 12 and further out through the openings 7. The volume between the wave-shaped displacers 11 are further filled with mass radially as well as horizontally from the sides due to their great exposure to the mass and the support of the feed roller 18.

The mass is then relieved from any statio overpressure as exerted by the prior art machines. The inner structure of the mass is then not affected by the inventive solution to the same extent as by the prior art. An inventive apparatus is then also provided, which is extremely gentle to the inner structure of the mass, such as required for dough and aerated mass.

The feed roller 18 has advantageously longitudinally extending teeth 21 for creating perfect grip in the mass. As the pump roller 4 and the feed roller 18 are supported in channels 5, 20 extending inside the trough 2 the building-wise thereof is especially simple. No separate housing with a lot of parts is required. The inventive apparatus is at the same time simple and fast to dismantle and reassemble again for cleaning and service.

The diameter of the pump roller 4 is somewhat larger than half of the width of the trough 2 as disclosed in figure 2. The exposure period for filling the mass in between the wave-shaped displacers 11 are then large and major, so that the pump roller 4 provides for an accurate pump with high capacity also when required at high revolutions of the pump roller 4. This is especially advantageous when the mass has content of inclusions.

The arc-shaped channels 12 are closed against each other by a successive row of arc-shaped parts 22, which are arranged in the channel 5 in between the wave-shaped displacers 11. When assembly and disassembly are required, it is fast to remove and insert the arc-shaped parts 22.

When the radial height H of the arc-shaped channels 12 is smaller than 1/10 of the diameter D of the pump roller 4, the filling of the pump 4 in between the wave-shaped displacers 11 with mass is fast. The mass then only has to flow a short radial distance into the pump 4, which provides for an extremely accurate pump.

When the wave-shaped displacers 11 comprise more than four waves extending over the periphery of the rotors 9, at least one wave is always closed of against suction and pressure in the arc-shaped channels 12, when the pump roller 4 rotates. The pump is then especially advantageous for low-density mass, for example aerated mass.

When the diameter D of the feed roller 18 is between half and % of the width W of the trough 2, the transport of the mass down into the arc-shaped channels 12 is powerful and most efficient for all types of mass.

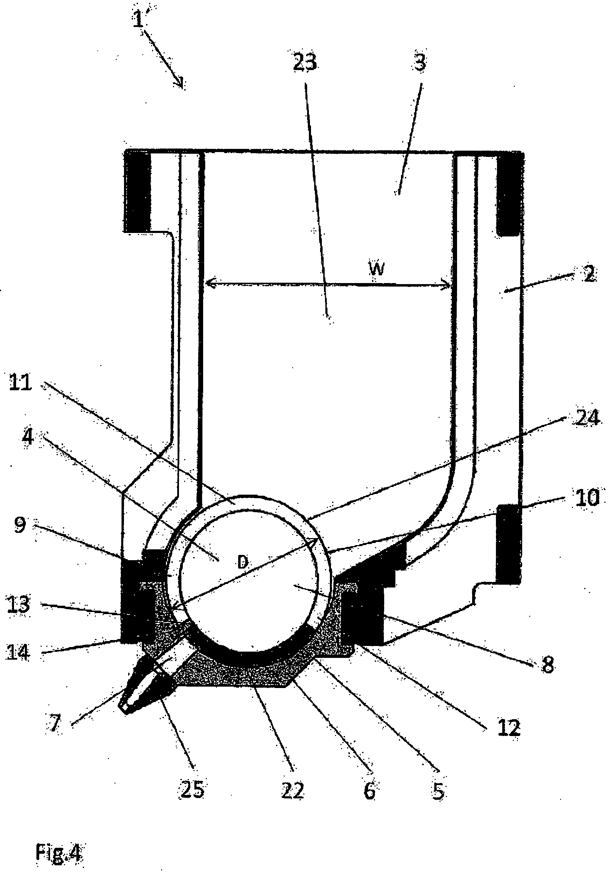

The apparatus 1' of figures 1-3 is disclosed in figure 4 in an even more simple embodiment without the feed roller. All other parts of the apparatus 1' is the same. The inside chamber 3 extends as a vertical channel 23 from the top of the trough 2 and down to an upper part 24 of the pump roller periphery 10. The upper part 24 of the periphery 10 of the pump roller 4 is then exposed directly to the major mass in the trough 2. The vertical channel 23 is broad and the upper part 24 of the pump roller 4 is also large.

When the mass is filled into the trough 2, it fills out the vertical channel 23 on top of the upper part 24 of the periphery of the pump 4. So the mass is free to flow downwards and then effectively tills radially in between the wave-shaped displacers 11 and into the arc-shaped chambers 12 of the pump roller 4.
The wave-shaped displacers 11 of the pump roller 4 effectively take the full action of a pump, which continuously transports the mass on to the openings 7 at the bottom of the trough 2.

Mass with high contents of inclusions, or large inclusions, may then enter into the roller pump right away and very easily, still bringing with it the inclusions into the pump cavities. Hereby is achieved an apparatus which is advantageous for mass with Inclusions. The apparatus is further extremely simple in its building-wise, has very few parts, and is fast and simple to clean and service.

The embodiments disclosed in figures 1-4 has a nozzle part 25 mounted in succession of the row of openings 7 for guiding the mass during deposit.

## Claims

1. Apparatus (1 ;1') for depositing edible mass, comprising an elongated trough (2) with an inside chamber (3) for the mass, a pump roller (4) housed in a support channel (5) at the bottom (6) of the trough (2), as well as a row of deposit openings (7) arranged along the bottom (6), which pump roller (4) comprises a single, central shaft (8) having a succession of disc-shaped rotors (9) defining the outer periphery (10) of the pump roller (4), and which rotors (9) are formed as wave-shaped displacers (11) arranged in a succession of arc-shaped channels (12) in which the mass is transported towards the particular openings (7) at the bottom (6), that a closure plate (13) is arranged longitudinally in a groove (14) in the channel (5) and radially to the shaft (8), comprising a succession of notches (15) into which the rotors (9) engage, so that the plate (13) is given a reciprocal movement by the rotation of the pump roller (4),
**characterized in,**
**that** the inside chamber (3) extends as a vertical channel (16;23) with no restrictions from the open top of the trough (2) and down to an upper part (17;24) of the pump roller periphery (10), which is being exposed directly to the major mass in the trough.

2. Apparatus according to claim 1, **characterised in, that** the circumferential length (CL) of the exposed upper part (17) of the pump roller periphery is greater than one full length (WL) of a wave of the wave-shaped displacers (11).

3. Apparatus according to claim 1, **characterized in, that** an upper, longitudinally extending feed roller (18) is arranged with part of its periphery (19) in a secondary channel (20) in the trough (2) and having Its periphery close to the periphery (10) of the pump roller (4), and that the pump roller (4) and the feed roller (18) are adapted to rotate in opposite directions (A, B) in towards each other for transporting the mass in the trough (2) directly down in between the wave-shaped displacers (11) and into the arc-shaped channels (12).

4. Apparatus according to claim 1, **characterized in, that** the diameter (D) of the pump roller (4) is larger than half of the width (W) of the trough (2).

5. Apparatus according to claim 1, **characterised in, that** the radial height (H) of the arc-shaped channels (12) is smaller than 1/10 of the diameter of the pump roller (4).

6. Apparatus according to claim 1, **characterized in, that** the periphery (10) of the wave-shaped displacers (11) each comprise at least five waves.

7. Apparatus according to claim 1, **characterized in, that** the diameter (DF) of the feed roller (18) is between half and ¾ of the width (W) of the trough (2).

8. Apparatus according to claim 1, **characterised in, that** the arc-shaped channels (12) are closed against each other by a successive row of intermediary, arc-shaped parts (22), which are arranged in the channel (5) in between the wave-shaped displacers (11).

## Patentansprüche

1. Vorrichtung (1; 1') zum Ablegen essbarer Masse, umfassend einen länglichen Trog (2) mit einer inneren Kammer (3) für die Masse, einer Pumpenrolle (4), die in einem Stützkanal (5) am Boden (6) des Trogs (2) untergebracht ist, sowie eine Reihe von Ablageöffnungen (7), die entlang dem Boden (6) angeordnet sind, wobei die Pumpenrolle (4) eine einzige mittlere Welle (8) mit einer Abfolge von scheibenförmigen Läufern (9) umfasst, die den äußeren Umfang (10) der Pumpenrolle (4) definieren und die als wellenförmige Verdrängungskörper (11) ausgebildet sind, die in einer Abfolge von bogenförmigen Kanälen (12) angeordnet sind, in denen die Masse zu den bestimmten Öffnungen (7) am Boden (6) transportiert wird, dass eine Verschlussplatte (13) in Längsrichtung in einer Nut (14) im Kanal (5) und radial zur Welle (8) angeordnet ist, umfassend eine Abfolge von Kerben (15), in denen die Läufer (9) in Eingriff kommen, so dass der Platte (13) eine hin- und hergehende Bewegung durch die Drehung der Pumpenrolle (4) verliehen wird, **dadurch gekennzeichnet, dass**
sich die innere Kammer (3) als ein vertikaler Kanal (16; 23) erstreckt, ohne Verengungen von der offenen Oberseite des Trogs (2) und hinunter zu einem oberen Teil (17; 24) des Pumpenrollenumfangs (10), der der Hauptmasse im Trog direkt ausgesetzt wird.

2. Vorrichtung nach Anspruch 1, **dadurch gekennzeichnet, dass** die Umfangslänge (CL) des freiliegenden oberen Teils (17) des Pumpenrollenumfangs größer als eine volle Länge (WL) einer Welle der wellenförmigen Verdrängungskörper (11) ist.

3. Vorrichtung nach Anspruch 1, **dadurch gekennzeichnet, dass** eine obere, sich in Längsrichtung erstreckende Zuführrolle (18) so angeordnet ist, dass sich ein Teil ihres Umfangs (19) in einem sekundären Kanal (20) im Trog (2) befindet und ihr Umfang nahe dem Umfang (10) der Pumpenrolle (4) ist, und dass die Pumpenrolle (4) und die Zuführrolle (18) geeignet sind, sich in entgegengesetzten Richtungen (A, B) zueinander zu drehen, um die Masse im Trog (2) direkt hinunter zwischen die wellenförmigen Verdrängungskörper (11) und in die bogenförmigen Kanäle (12) zu transportieren.

4. Vorrichtung nach Anspruch 1, **dadurch gekennzeichnet, dass** der Durchmesser (D) der Pumpenrolle (4) größer als die Hälfte der Breite (W) des Trogs (2) ist.

5. Vorrichtung nach Anspruch 1, **dadurch gekennzeichnet, dass** die radiale Höhe (H) der bogenförmigen Kanäle (12) kleiner als 1/10 des Durchmessers der Pumpenrolle (4) ist.

6. Vorrichtung nach Anspruch 1, **dadurch gekennzeichnet, dass** der Umfang (10) der wellenförmigen Verdrängungskörper (11) jeweils mindestens fünf Wellen umfassen.

7. Vorrichtung nach Anspruch 1, **dadurch gekennzeichnet, dass** der Durchmesser (DF) der Zuführrolle (18) zwischen der Hälfte und ¾ der Breite (W) des Trogs (2) beträgt.

8. Vorrichtung nach Anspruch 1, **dadurch gekennzeichnet, dass** die bogenförmigen Kanäle (12) durch eine aufeinanderfolgende Reihe von bogenförmigen Zwischenteilen (22), die im Kanal (5) zwischen den wellenförmigen Verdrängungskörpern (11) angeordnet sind, gegeneinander verschlossen sind.

## Revendications

1. Appareil (1; 1') pour déposer une masse comestible, comprenant une auge allongée (2) présentant une chambre intérieure (3) pour la masse, un rouleau de pompage (4) logé dans un canal de support (5) au fond (6) de l'auge (2), ainsi qu'une rangée d'ouvertures de dépôt (7) agencées le long du fond (6), ledit rouleau de pompage (4) comprenant un seul arbre central (8) comportant une succession de rotors en forme de disque (9) définissant la périphérie extérieure (10) du rouleau de pompage (4), et lesdits rotors (9) étant formés comme des mécanismes de déplacement de forme ondulée (11) agencés dans une succession de canaux en forme d'arc (12) dans lesquels la masse est transportée en direction des ouvertures particulières (7) au fond (6), une plaque de fermeture (13) étant agencée de façon longitudinale dans une rainure (14) dans le canal (5) et radialement par rapport à l'arbre (8), comprenant une succession d'encoches (15) dans lesquelles les rotors (9) s'engagent, de telle sorte que la plaque (13) exécute un mouvement réciproque sous l'effet de la rotation du rouleau de pompage (4),
**caractérisé en ce que** la chambre intérieure (3) s'étend comme un canal vertical (16; 23) sans aucune restriction à partir du sommet ouvert de l'auge (2) et vers le bas jusqu'à une partie supérieure (17; 24) de la périphérie du rouleau de pompage (10), qui est exposée directement à la masse majeure dans l'auge.

2. Appareil selon la revendication 1, **caractérisé en ce que** la longueur circonférentielle (CL) de la partie supérieure exposée (17) de la périphérie du rouleau de pompage est plus grande que la longueur totale (WL) d'une ondulation des mécanismes de déplacement de forme ondulée (11).

3. Appareil selon la revendication 1, **caractérisé en ce qu'**un rouleau d'alimentation supérieur s'étendant de façon longitudinale (18) est agencé avec une partie de sa périphérie (19) dans un canal secondaire (20) dans l'auge (2) et a sa périphérie proche de la périphérie (10) du rouleau de pompage (4), et **en ce que** le rouleau de pompage (4) et le rouleau d'alimentation (18) sont aptes à tourner dans des directions opposées (A, B) l'un vers l'autre afin de transporter la masse dans l'auge (2) directement vers le bas entre les mécanismes de déplacement de forme ondulée (11) et dans les canaux en forme d'arc (12).

4. Appareil selon la revendication 1, **caractérisé en ce que** le diamètre (D) du rouleau de pompage (4) est plus grand que la moitié de la largeur (W) de l'auge (2).

5. Appareil selon la revendication 1, **caractérisé en ce que** la hauteur radiale (H) des canaux en forme d'arc (12) est plus petite que 1/10 du diamètre du rouleau de pompage (4).

6. Appareil selon la revendication 1, **caractérisé en ce que** la périphérie (10) des mécanismes de déplacement de forme ondulée (11) comprend pour chacun au moins cinq ondulations.

7. Appareil selon la revendication 1, **caractérisé en ce que** le diamètre (DF) du rouleau d'alimentation (18) est compris entre la moitié et les trois-quarts de la largeur (W) de l'auge (2).

8. Appareil selon la revendication 1, **caractérisé en ce que** les canaux en forme d'arc (12) sont serrés les uns contre les autres par une rangée successive de parties intermédiaires en forme d'arc (22) qui sont agencées dans le canal (5) entre les mécanismes de déplacement de forme ondulée (11).
